# EUROPEAN PATENT APPLICATION

(11) **EP 4 583 270 A1**
(43) Date of publication of application: **09.07.2025**
(21) Application number: 23938694.9
(22) Date of filing: 16.11.2023
(51) Int. Cl.: H01M 50/209, H01M 50/244

(54) **BATTERY MODULE, BATTERY, ENERGY STORAGE DEVICE AND ELECTRIC DEVICE**

(71) Applicant: Contemporary Amperex Technology (Hong Kong) Limited, Hong Kong (HK)
(72) Inventor: LIN, Denghua, Ningde, Fujian 352100 (CN); YANG, Xiao, Ningde, Fujian 352100 (CN); SU, Huasheng, Ningde, Fujian 352100 (CN); CAO, Mengkai, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2023/132130
(87) International publication number: WO 2025/102321

(57) **Abstract**

This application discloses a battery module, a battery, an energy storage apparatus, and an electric apparatus. The battery module includes a battery cell group and end plates. The battery cell group includes multiple battery cells stacked in a first direction. The end plate is located at an end of the battery cell group in the first direction. The multiple battery cells include at least one first battery cell, and the first battery cell includes a housing and an end cover. The housing has an opening in a second direction, the housing has first walls in the first direction, the first wall includes a first body portion and a first thickened portion arranged in the second direction, the first body portion is farther from the opening than the first thickened portion, and thickness of the first thickened portion is larger than thickness of the first body portion, the first direction and the second direction being perpendicular to each other. The end cover is connected to the housing to close the opening. In a direction from the first body portion towards the first thickened portion, at least a part of the first thickened portion exceeds the end plate. The technical solutions provided in this application can increase the reliability of batteries.

## Description

### TECHNICAL FIELD

This application relates to the field of battery technologies, and specifically to a battery module, a battery, an energy storage apparatus, and an electric apparatus.

### BACKGROUND

Energy saving and emission reduction are crucial to the sustainable development of the automobile industry. Electric vehicles, with their advantages in energy conservation and environmental protection, have become an important part of the sustainable development of the automobile industry. For electric vehicles, battery technology is an important factor in connection with their development.

In the development of battery technologies, how reliability of batteries is enhanced is an urgent technical problem to be resolved in battery technologies.

### SUMMARY

This application provides a battery module, a battery, an energy storage apparatus, and an electric apparatus. The technical solutions provided in this application can increase the reliability of batteries.

This application is implemented by the following technical solutions.

According to a first aspect, this application provides a battery module. The battery module includes a battery cell group and end plates. The battery cell group includes multiple battery cells stacked in a first direction. The end plate is located at an end of the battery cell group in the first direction. The multiple battery cells include at least one first battery cell, and the first battery cell includes a housing and an end cover. The housing has an opening in a second direction, the housing has first walls in the first direction, the first wall includes a first body portion and a first thickened portion arranged in the second direction, the first body portion is farther from the opening than the first thickened portion, and thickness of the first thickened portion is larger than thickness of the first body portion, the first direction and the second direction being perpendicular to each other. The end cover is connected to the housing to close the opening. In a direction from the first body portion towards the first thickened portion, at least a part of the first thickened portion exceeds the end plate.

In the foregoing solution, for the first battery cell in the battery cell group, setting the first thickened portion of the first wall corresponding to the opening to be thicker than the first body portion can increase the strength of a part of the first wall not restrained by the end plate, thereby effectively alleviating the problem that the part of the housing not restrained by the end plate cracks under impact and making the battery have high reliability.

According to some embodiments of this application, in the first direction, a projection of the first thickened portion partially overlaps with a projection of the end plate.

In the foregoing solution, with the projection of the first thickened portion in the first direction set to partially overlap with the projection of the end plate in the first direction, the part of the first battery cell corresponding to the opening and not restrained by the end plate, as well as the part partially restrained by the end plate can be relatively thick, effectively improving the strength of the housing. Therefore, the risk that the housing cracks under impact is reduced and thus the battery has high reliability.

According to some embodiments of this application, size of an overlap zone of the projection of the first thickened portion and the projection of the end plate in the second direction is x1, satisfying 0 mm≤x1≤10 mm.

In the foregoing solution, from the perspective of improving strength, limiting the size x1 of the overlap zone of the projection of the first thickened portion and the projection of the end plate in the second direction to 0 mm≤x1≤10 mm can effectively increase the strength of the part of the housing not restrained by the end plate, so that the risk that the housing cracks under impact is effectively reduced and thus the battery has high reliability.

According to some embodiments of this application, an orthographic projection of the end plate on the first wall is spaced from the first thickened portion in the second direction.

In the foregoing solution, with the orthographic projection of the end plate on the first wall spaced from the first thickened portion in the second direction to make the entire first thickened portion above the end plate, the risk that the first thickened portion occupying too much space affects the volume and mass energy density of the battery can be reduced.

According to some embodiments of this application, a spacing distance between the orthographic projection of the end plate on the first wall and the first thickened portion in the second direction is x2, satisfying 0 mm<x2≤10 mm.

In the foregoing solution, limiting the spacing distance x2 between the orthographic projection of the end plate on the first wall and the first thickened portion in the second direction to 0 mm<x2≤10 mm can reduce the impact caused by disposing the first thickened portion to the energy density of the battery.

According to some embodiments of this application, one of the following conditions is satisfied:
in the first direction, the first thickened portion exceeds an inner surface of the first body portion;
in the first direction, the first thickened portion exceeds an outer surface of the first body portion; and
in the first direction, the first thickened portion exceeds both an inner surface and an outer surface of the first body portion.

In the foregoing solution, three schemes are provided. In the first one, the first thickened portion is set to exceed the inner surface of the first body portion, that is, thickening is performed inside the housing, so as to utilize the space inside the housing. This reduces external space occupied by the battery module and makes the battery have a high volumetric energy density. In the second one, the first thickened portion is set to exceed the outer surface of the first body portion, that is, thickening is performed outside the housing, so as to reduce the interference with the electrode assembly in the housing caused by disposing the first thickened portion. This reduces the risk of lithium precipitation and makes the battery have high reliability. In the third one, thickening is performed outside and inside the housing to form the first thickened portion, so as to reduce the external space occupied by the battery module and also reduce the interference with the battery assembly. This makes the battery have a high energy density in addition to certain reliability.

According to some embodiments of this application, the first thickened portion is integrally formed with the first body portion; or the first thickened portion includes a first part and a second part stacked in the first direction; and in the second direction, the first part is integrally formed with the first body portion, and the first part and the second part are separately formed and connected to each other.

In the foregoing solution, in some embodiments, integrally forming the first thickened portion with the first body portion allows for a high structural strength between the first thickened portion and the first body portion, so that the risk that the housing cracks under impact is reduced and thus the battery has high reliability. In some other embodiments, the first thickened portion is so disposed that it includes the separate first part and second part connected to each other, to reduce the difficulty of increasing the wall thickness of the housing, thereby improving the manufacturing efficiency of the battery.

According to some embodiments of this application, in the first direction, the first thickened portion exceeds the inner surface of the first body portion; and the first battery cell further includes an electrode assembly, where the electrode assembly is disposed within the housing, and in the first direction, the projection of the first thickened portion does not overlap with a projection of the electrode assembly.

In the foregoing solution, first, the projection of the first thickened portion is set to not overlap with the projection of the electrode assembly so that the first thickened portion does not interfere with the electrode assembly, reducing the risk of lithium precipitation, thereby making the battery have high reliability. Second, on the basis that the projection of the first thickened portion is set to not overlap with the projection of the electrode assembly, the first thickened portion is set to exceed the inner surface of the first body portion, that is, thickening is performed inside the housing. This can reasonably use the space inside the housing, and reduce external space occupied by the battery module without interfering with the electrode assembly, thereby making the battery have a higher volumetric energy density.

According to some embodiments of this application, size of the first thickened portion in the second direction is L, satisfying0.3 mm≤L≤15 mm.

In the foregoing solution, limiting the size L of the first thickened portion in the second direction to 0.3 mm≤L≤15 mm can allow the first thickened portion to increase the structural strength of the housing, so that the risk that the housing cracks under impact is reduced and thus the battery has high reliability.

According to some embodiments of this application, thickness of the end plate is A, and the thickness of the first thickened portion is a, satisfying 1≤A/a≤360.

In the foregoing solution, if the battery module is considered as a whole, increasing the thickness of the end plate can also correspondingly increase the structural strength of the housing of the first battery cell. For this reason, limiting the thickness A of the end plate and the thickness a of the first thickened portion to satisfy 1≤A/a≤360 can increase the structural strength of the entire battery module, so that the risk that the housing cracks under impact is reduced; and can reasonably limit the thickness of the end plate and the thickness of the first thickened portion, reducing the impact caused by an increased wall thickness to the energy density of the battery module, thereby making the battery have a higher volumetric energy density and mass energy density.

According to some embodiments of this application, in a case that the first thickened portion is made of aluminum or aluminum alloy, 1≤A/a≤120 is satisfied; or in a case that the first thickened portion is made of steel, 2.5≤A/a≤360 is satisfied.

In the foregoing solution, in some embodiments, in a case that the first thickened portion is made of aluminum or aluminum alloy, the thickness A of the end plate and the thickness a of the first thickened portion can be limited to satisfy 1≤A/a≤120, so that the battery module has a high structural strength and thus the battery has high reliability. In some embodiments, in a case that the first thickened portion is made of steel, the thickness A of the end plate and the thickness a of the first thickened portion can be limited to satisfy 2≤A/a≤360, so that the battery module has a high structural strength, and then the battery has high reliability.

According to some embodiments of this application, in a case that the first thickened portion is made of aluminum or aluminum alloy, 1.4≤A/a≤90 is satisfied.

In the foregoing solution, in some embodiments, in a case that the first thickened portion is made of aluminum or aluminum alloy, the thickness A of the end plate and the thickness a of the first thickened portion can be limited to satisfy 1.4≤A/a≤90, so that the battery module has a high structural strength and thus the battery has high reliability.

According to some embodiments of this application, the first wall further includes a transition portion. The first thickened portion is connected to the first body portion through the transition portion, and in the direction from the first body portion towards the first thickened portion, thickness of the transition portion gradually increases.

In the foregoing solution, disposing the transition portion to gradually thicken the housing in the second direction can help to form the first thickened portion, thereby reducing the manufacturing difficulty of the housing and improving the manufacturing efficiency of the battery.

According to some embodiments of this application, in the direction from the first body portion towards the first thickened portion, the transition portion exceeds the end plate; or in the direction from the first body portion towards the first thickened portion, at least a part of the transition portion does not exceed the end plate.

In the foregoing solution, in some embodiments, the transition portion is set to exceed the end plate, that is, both the transition portion and the first thickened portion are entirely above the end plate, so as to effectively reduce the risk of the housing thickened affecting the energy density of the battery. In some embodiments, at least the part the transition portion set to not exceed the end plate, that is, the part of the first wall not restrained by the end plate is thickened, so that the strength of the housing can be effectively increased, the risk that the housing cracks under impact is reduced, and thus the battery has high reliability.

According to some embodiments of this application, the end cover is connected to the first thickened portion.

In the foregoing solution, disposing the end cover can effectively close the opening so that the electrode assembly and electrolyte of the first battery cell are in a closed space, reducing the interference of external substances with the interior of the first battery cell. In addition, disposing the first thickened portion can increase the strength of the housing, reducing or alleviating the risk of cracking and failure at a welding location between the end cover and the housing, thereby improving reliability of the battery.

According to some embodiments of this application, the end cover is welded to the first wall to form a first welded zone, and in the second direction, the first thickened portion is located between the first welded zone and the first body portion.

In the foregoing solution, disposing the first thickened portion between the first welded zone and the first body portion allows for a high strength after the housing and the end cover are welded, reducing or alleviating the risk of cracking and failure at a welding location between the end cover and the housing, thereby improving reliability of the battery.

According to some embodiments of this application, the first battery cell has two first walls disposed opposite each other in the first direction.

In the foregoing solution, disposing two opposite wall portions of the first battery cell as first walls with the first thickened portion can effectively increase impact resistance of the first battery cell, so that the risk that the housing cracks is reduced and reliability of the battery is improved.

According to some embodiments of this application, the housing has second walls in a third direction, the second wall is adjacent to the first wall, and area of the first wall is larger than area of the second wall, the third direction, the second direction, and the first direction being perpendicular to each other; and the second wall includes a second body portion and a second thickened portion stacked in the second direction; and in the second direction, the second body portion is farther from the opening than the second thickened portion, and thickness of the second thickened portion is larger than thickness of the second body portion.

In the foregoing solution, setting the second thickened portion of the second wall corresponding to the opening to be thicker than the second body portion can increase the strength of the housing, so that the risk that the housing cracks under impact is reduced and thus reliability of the battery is improved.

According to some embodiments of this application, the housing includes two first walls disposed opposite each other in the first direction, and two second walls disposed opposite each other in the third direction, and the first walls and the second walls are connected to each other to enclose the opening.

In the foregoing solution, the part of the housing surrounding the opening is all set to be thick can effectively increase the strength of the housing, thereby reducing the risk of housing cracking and improving reliability of the battery.

According to some embodiments of this application, each of the battery cells in the battery cell group is the first battery cell.

In the foregoing solution, with each battery cell in the battery module set to be the first battery cell, that is, with each battery cell disposed with the first thickened portion, the battery module can have a high structural strength, effectively overcoming impact caused by charging/discharging-induced swelling or external influence to the housing. This reduces the cracking risk of the housing and allows for high reliability of the battery.

According to some embodiments of this application, in the first direction, the first battery cell is located at an end of the battery cell group, and the first battery cell abuts against the end plate.

In the foregoing solution, disposing the battery cell at the end as the first battery cell can effectively alleviate the problem that because the part of the first wall near the end cover is not restrained, the first wall cracks under impact of internal swelling force on the first wall during charging and discharging of the battery cell, where such cracking affects reliability of the battery. This allows for high reliability of the battery module and thus high reliability of the battery.

According to some embodiments of this application, the first wall is a wall portion of the housing of the first battery cell facing towards the end plate, and a thickness direction of the first wall is the first direction.

In the foregoing solution, limiting the first wall to be a wall portion corresponding to the end plate allows the first thickened portion to effectively improve the structural strength of the part of the first wall not restrained by the end plate, so that the risk of the first wall cracking under impact is small, thereby improving reliability of the battery module and thus improving reliability of the battery.

According to some embodiments of this application, in the first direction, the first battery cell is located at the middle of the battery cell group.

In some embodiments, when the battery module is subjected to external impact (or which can be understood as being under a working condition of vibration), the battery cell at the middle is more affected. Therefore, in the foregoing solution, disposing the battery cell at the middle of the battery cell group as the first battery cell can effectively alleviate the problem that the housing of the battery cell cracks when the battery module is under impact, while such cracking affects the reliability of the battery module. This allows for high reliability of the battery.

According to some embodiments of this application, multiple first battery cells are provided, and in the first direction, the first battery cells are provided at the middle and end of the battery cell group.

In the foregoing solution, with the battery cell at the middle and the battery cell at the end of the battery cell group disposed as first battery cells, the battery module can effectively cope with impact of cracking of the housing caused by the internal swelling of the battery cell during charging and discharging and external impact in a working condition of vibration. This allows for high reliability of the battery.

According to a second aspect, this application further provides a battery including the battery module according to the first aspect.

According to a third aspect, this application further provides an energy storage apparatus including the battery module according to the first aspect.

According to a third aspect, this application further provides an electric apparatus including the battery module according to the first aspect configured to supply electric energy.

For additional aspects and advantages of this application, some will be given in the following description, and some will become apparent in the following description or will be understood in the practice of this application.

### BRIEF DESCRIPTION OF DRAWINGS

In order to describe the technical solutions in the embodiments of this application more clearly, the following briefly describes the accompanying drawings required for describing the embodiments. It should be appreciated that, the accompanying drawings below only show some embodiments of this application, and thus should not be considered as a limitation to the scope. A person of ordinary skill in the art may still derive other related drawings from the accompanying drawings without creative efforts.
FIG. 1 is a schematic diagram of a vehicle according to some embodiments of this application;
FIG. 2 is a three-dimensional exploded view of a battery according to some embodiments of this application;
FIG. 3 is a three-dimensional diagram of a battery module according to some embodiments of this application;
FIG. 4 is a schematic diagram of a first battery cell and an end plate according to some embodiments of this application;
FIG. 5 is an enlarged view of position B in FIG. 4;
FIG. 6 is a schematic diagram of a first wall according to some embodiments of this application;
FIG. 7 is a schematic diagram of an end plate and a first wall according to some embodiments of this application;
FIG. 8 is a schematic diagram of a first wall and an end plate according to some other embodiments of this application;
FIG. 9 is a schematic diagram of a first wall and an end plate according to some other embodiments of this application;
FIG. 10 is a schematic diagram of a first wall and an end plate according to some other embodiments of this application;
FIG. 11 is a schematic diagram of a first battery cell according to some other embodiments of this application;
FIG. 12 is a schematic diagram of a battery module according to some other embodiments of this application;
FIG. 13 is a schematic diagram of a battery module according to some other embodiments of this application; and
FIG. 14 is a schematic diagram of a battery module according to some other embodiments of this application.

Signs: 10. battery module; 11. battery cell group; 110. battery cell; 12. end plate; 13. strapping piece; 110a. first battery cell; 20. housing; 20a. opening; 20b. first welded zone; 21. first wall; 210. first body portion; 211. first thickened portion; 2110. first part; 2111. second part; 212. transition portion; 22. second wall; 220. second body portion; 221. second thickened portion; 30. end cover; 40. electrode assembly; x. first direction; z. second direction; y. third direction; 1000. vehicle; 100. battery; 200. controller; 300. motor; 50. box; 51. first box portion; and 52. second box portion.

### DESCRIPTION OF EMBODIMENTS

The following describes in detail the embodiments of technical solutions in this application with reference to the accompanying drawings. The following embodiments are merely used to describe technical solutions in this application more explicitly, and therefore they are merely used as examples and do not constitute a limitation to the protection scope of this application.

Unless otherwise defined, all technical and scientific terms used herein shall have the same meanings as commonly understood by those skilled in the art to which this application belongs. The terms used herein are merely intended to describe the specific embodiments but not intended to constitute any limitation on this application. The terms "include", "include", and "having" and any other variations thereof in the specification, the claims and the foregoing brief description of drawings of this application are intended to cover a non-exclusive inclusion.

In descriptions of embodiments of this application, the terms "first", "second" and the like are merely intended to distinguish between different objects, and shall not be understood as any indication or implication of relative importance or any implicit indication of the number, specific sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the descriptions of the embodiments of this application, the term "and/or" describes only an association relationship for describing associated objects and represents that three relationships may exist. For example, A and/or B may represent the following three cases: A alone, both A and B, and B alone. In addition, a character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as suitable to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cuboid, or of other shapes, and this is not limited in the embodiments of this application either. The battery mentioned in the embodiments of this application is a single physical module that includes one or more battery cells for providing a higher voltage and capacity. For example, the battery mentioned in this application may include a battery module. The battery module may include end plates and a battery cell group. The battery cell group may include multiple battery cells stacked together. Two end plates may be disposed, and the two end plates are respectively disposed at two ends of the battery cell group to fasten the multiple battery cells. A battery typically includes a box configured to enclose one or more battery modules. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration (for example, deintercalation and intercalation) of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A negative electrode current collector uncoated with the negative electrode active substance layer bulges out of a negative electrode current collector coated with the negative electrode active substance layer, and the negative electrode current collector uncoated with the negative electrode active substance layer serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of PP (polypropylene, polypropylene), PE (polyethylene, polyethylene), or the like. In addition, the electrode assembly may be a winding structure or a laminated structure, but the embodiments of this application are not limited thereto.

For the development of battery technologies, many design factors need to be considered, for example, performance parameters such as energy density, cycle life, discharge capacity, and charge and discharge rate, as well as reliability of the battery. As for a battery cell, the battery cell typically includes a housing, an end cover, an electrode assembly, and an electrolyte, with the electrode assembly and electrolyte disposed inside the housing. The end cover is welded to the housing to close an opening of the housing. In order to ensure the energy density of the battery cell, the housing is usually set to be thin. However, a heat-affected zone that reduces the strength of the housing is often formed below a weld pool after the end cover and the housing are welded. In terms of the battery module, the end plate of the battery module serves to fasten and restrain the battery cells. Because the height of the end plate is lower than the height of the battery cell, and the heat-affected zone of the battery cell is generally above the end plate, the part of the housing corresponding to the heat-affected zone is not restrained by the end plate. When the battery module is impacted, the risk of cracking in the heat-affected zone of the battery cell is high, affecting the reliability of the battery.

In view of this, to alleviate the problem that welding of the housing causes a low strength heat-affected zone that is not restrained by the end plate and therefore has a high risk of cracking, affecting the reliability of the battery, some embodiments of this application provide a battery module. In the battery module, end plates are disposed at ends of a battery cell group in a first direction. The multiple battery cells of the battery cell group include at least one first battery cell, and the first battery cell includes a housing and an end cover. The housing has an opening in a second direction, the housing has first walls in the first direction, the first wall includes a first body portion and a first thickened portion arranged in the second direction, and thickness of the first thickened portion is larger than thickness of the first body portion, the first direction and the second direction being perpendicular to each other. The end cover is connected to the first thickened portion to close the opening. In a direction from the first body portion towards the first thickened portion, at least a part of the first thickened portion exceeds the end plate.

In the foregoing solution, for the first battery cell in the battery cell group, setting the first thickened portion of the first wall corresponding to the opening to be thicker than the first body portion can allow for a high strength after the housing and the end cover are welded, reducing or alleviating the risk of cracking and failure at the welding position of the end cover and the housing, thereby improving the reliability of the battery; and increase the strength of a part of the first wall not restrained by the end plate, thereby effectively alleviating the problem that the part of the housing not restrained by the end plate cracks under impact and making the battery have high reliability.

The technical solution described in the embodiments of this application is applicable to batteries, energy storage apparatuses with battery module, and electric apparatuses using battery module.

The energy storage apparatus may include multiple battery modules, and the multiple battery modules is connected in series, parallel, or series-parallel. The energy storage apparatus may be an energy storage cabinet, an energy storage box, or other devices capable of storing electric energy.

The electric apparatus may be a vehicle, a mobile phone, a portable device, a notebook computer, a ship, a spacecraft, an electric toy, an electric tool, or the like. The vehicle may be a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the following embodiments are described using the electric apparatus being a vehicle 1000 as an example.

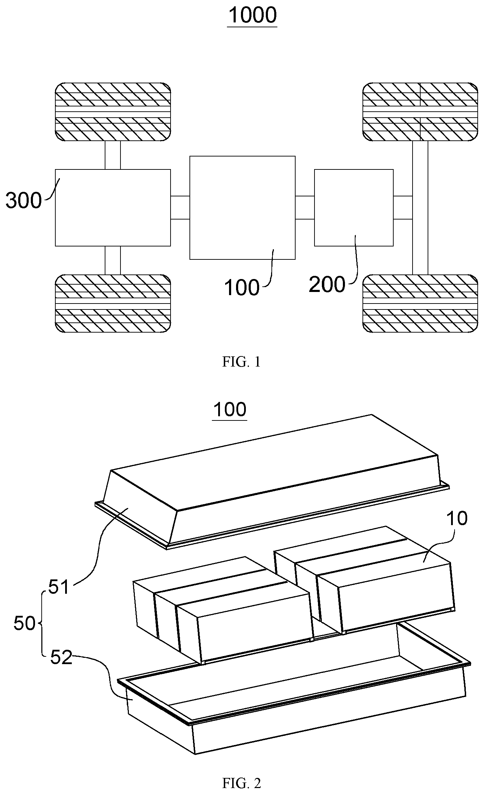

FIG. 1 is a schematic diagram of a vehicle 1000 according to some embodiments of this application.

A controller 200, a motor 300, and a battery 100 may be provided inside the vehicle 1000, where the controller 200 is configured to control the battery 100 to supply power to the motor 300. For example, the battery 100 may be disposed at the bottom, front, or rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000. In another embodiment of this application, the battery 100 can be used not only as the operational power source for the vehicle 1000, but also as a driving power source for the vehicle 1000, replacing or partially replacing fossil fuel or natural gas to provide driving traction for the vehicle 1000.

Referring to FIG. 2, FIG. 2 is a three-dimensional exploded view of a battery 100 according to some embodiments of this application.

The battery 100 includes a battery module 10 and a box 50. The plurality of battery modules 10 are accommodated in the box 50. The box 50 is configured to provide an accommodating space for the battery module 10. The box 50 may be a variety of structures. In some embodiments, the box 50 may include a first box portion 51 and a second box portion 52. The first box portion 51 and the second box portion 52 fit together. The first box portion 51 and the second box portion 52 jointly define an accommodating space for accommodating the battery module 10. The second box portion 52 may be a hollow structure with one end open, the first box portion 51 may be a plate structure, and the first box portion 51 covers an open side of the second box portion 52, so that the first box portion 51 and the second box portion 52 jointly define an accommodating space. The first box portion 51 and the second box portion 52 may both be a hollow structure with one side open, and the open side of the first box portion 51 covers the open side of the second box portion 52. Certainly, the box 50 formed by the first box portion 51 and the second box portion 52 may be in various shapes, for example, cylindrical or cuboid.

In the battery 100, one or more battery modules 10 may be disposed, and each battery module 10 may be fastened to the box 50 through a connector (for example, a bolt), or each battery module 10 may be fastened to the box 50 through adhering.

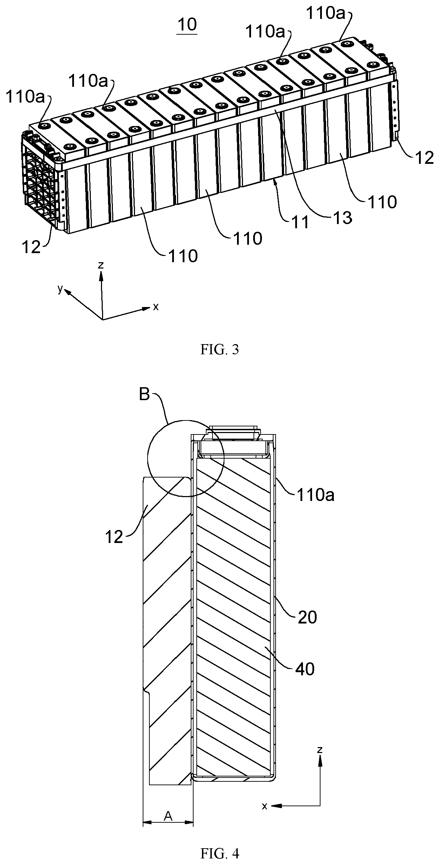

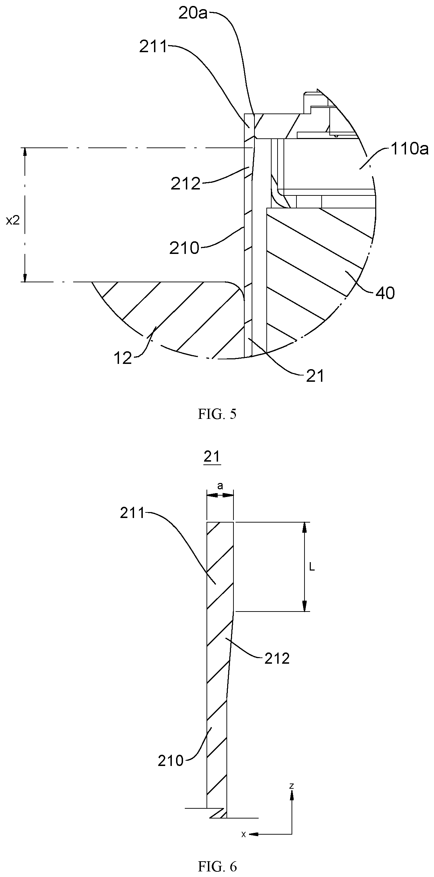

Some embodiments of this application provide a battery module 10. Referring to FIGs. 3 to 6, FIG. 3 is a three-dimensional diagram of a battery module 10 according to some embodiments of this application, FIG. 4 is a schematic diagram of a first battery cell 110a and an end plate 12 according to some embodiments of this application, FIG. 5 is an enlarged view of position B in FIG. 4, and FIG. 6 is a schematic diagram of a first wall 21 according to some embodiments of this application. In FIG. 4, only the first battery cell 110a and the end plate 12 are drawn together for description, and the specific position of the first battery cell 110a in the battery module 10 is not limited.

The battery module 10 includes a battery cell group 11 and end plates 12. The battery cell group 11 includes multiple battery cells 110 stacked in a first direction x. The end plate 12 is located at an end of the battery cell group 11 in the first direction x. The multiple battery cells 110 include at least one first battery cell 110a, and the first battery cell 110a includes a housing 20 and an end cover 30. The housing 20 has an opening 20a in a second direction z, the housing 20 has first walls 21 in the first direction x, the first wall 21 includes a first body portion 210 and a first thickened portion 211 arranged in the second direction z, and thickness of the first thickened portion 211 is larger than thickness of the first body portion 210, the first direction x and the second direction z being perpendicular to each other. The end cover 30 is connected to the housing 20 to close the opening 20a. In a direction from the first body portion 210 towards the first thickened portion 211, at least a part of the first thickened portion 211 exceeds the end plate 12.

The battery cell group 11 includes multiple battery cells 110, and the multiple battery cells 110 are stacked in the first direction x. That is, the first direction x may be a stacking direction of the multiple battery cells 110, or the first direction x may be a length direction of the battery cell group 11.

The end plate 12 is a component disposed at an end of the battery cell group 11 in the first direction x. In some embodiments, in the first direction x, one end plate 12 is disposed at both ends of the battery cell group 11. The end plates 12 at two ends of the battery cell group 11 may be connected through a connector, for example, strapped by a strapping piece 13, to fasten the end plates 12 and the battery cell group 11 together. The end plate 12 can restrain the multiple battery cells 110 in the battery cell group 11 so that the battery module 10 has good integrity. In some embodiments, the end plates 12 at two ends of the battery cell group 11 may be connected by side plates, and the side plate and the end plate 12 may be welded together, adhered together, connected by a threaded fastener, or the like.

In some embodiments, the end plate 12 may be made of plastic, aluminum, aluminum alloy, steel, or other materials.

"The multiple battery cells 110 includes at least one first battery cell 110a" may be understood as among the multiple battery cells 110 in the battery cell group 11, at least one battery cell 110 is the first battery cell 110a. For example, among the multiple battery cells 110 in the battery cell group 11, one battery cell 110 is the first battery cell 110a. For another example, among the multiple battery cells 110 in the battery cell group 11, two or more battery cells 110 are first battery cells 110a. For another example, among the multiple battery cells 110 in the battery cell group 11, all battery cells 110 are first battery cells 110a.

In some embodiments, among the multiple battery cells 110 in the battery cell group 11, the battery cell 110 at a specific position is the first battery cell 110a. For example, the battery cell 110 at the end of the battery cell group 11 and abutting against the end plate 12 is the first battery cell 110a. For another example, the battery cell 110 in the middle of the battery cell group 11 is the first battery cell 110a. The middle of the battery cell group 11 may be understood as follows: when the number of battery cells 110 in the battery cell group 11 is odd, a position of one battery cell 110 at the very middle is the middle of the battery cell group 11; when the number of battery cells 110 in the battery cell group 11 is even, positions of two middle battery cells 110 at the very middle are the middle of the battery cell group 11.

The following describes the first battery cell 110a. Refer to FIGs. 4 to 6. The first battery cell 110a includes a housing 20 and an end cover 30. An electrode assembly 40 and an electrolyte of the first battery cell 110a may be disposed inside the housing 20. The end cover 30 is welded to an opening end of the housing 20 to close an opening 20a of the housing 20. The second direction z may be a height direction of the housing 20, a height direction of the first battery cell 110a, or a height direction of the end plate 12. The housing 20 and the end cover 30 may be made of the same or different materials. The housing 20 may be made of aluminum, aluminum alloy, steel, or other materials. The end cover 30 may be made of aluminum, aluminum alloy, steel, or other materials.

The first wall 21 is a part of the housing 20. In some embodiments, the housing 20 may be square, and the housing 20 may include a peripheral wall and a bottom wall, with the peripheral wall disposed at the edge of the bottom wall. The first wall 21 may be a part of the peripheral wall. For example, the first wall 21 may be a wall portion with a larger area of the peripheral wall; or the first wall 21 may be a wall portion with a smaller area of the peripheral wall.

In some embodiments, the first wall 21 is a wall portion of the housing in the first direction x, which may be understood as the first wall 21 being right opposite the end cover 30. In other words, if the end plate 12 and the first wall 21 are both considered as planes, the end plate 12 and the first wall 21 are parallel to each other.

The first thickened portion 211 is a part of the first wall 21, and the first body portion 210 is a part of the first wall 21. The thickness of the first thickened portion 211 is larger than the thickness of the first body portion 210, that is, the first thickened portion 211 is thicker than the first body portion 210 or this may be understood as the strength of the first thickened portion 211 being higher than the strength of the first body.

In the second direction z, the first thickened portion 211 and the first body portion 210 are arranged side by side, and the first body portion 210 is farther from the end plate 12 than the first thickened portion 211. In some embodiments, the first thickened portion 211 and the first body portion 210 may be connected to each other. In some other embodiments, the first thickened portion 211 and the first body portion 210 may be connected by a transition portion 212 so that thickness of the first wall 21 is gradually increased.

In some embodiments, the first thickened portion 211 may be directly or indirectly connected, for example, welded to the end cover 30. An end of the first thickened portion 211 away from the first body portion 210 may be directly welded to the end cover 30. Alternatively, the end of the first thickened portion 211 away from the first body portion 210 may be connected to the end cover 30 through a first connecting transition portion, and the first connecting transition portion may be welded to the end cover 30. Thickness of the first connecting transition portion may be smaller than the thickness of the first thickened portion 211.

In some embodiments, the first thickened portion 211 may be closer to the opening 20a than the first body portion 210. In some other embodiments, the end of the first thickened portion 211 away from the first body portion 210 may be a part forming the opening 20a. That is, the first thickened portion 211 may be a part of the opening end of the housing 20, and the end of the first thickened portion 211 away from the first body portion 210 may be welded to the end cover 30.

In some embodiments, in the second direction z, the openings 20a are formed at two ends of the housing 20, and the openings 20a at the two ends of the housing 20 are respectively closed by corresponding end covers 30. In this embodiment, the first wall 21 may include two first thickened portions 211, one of the first thickened portions 211 corresponds to one of the openings 20a, and the other of the first thickened portions 211 corresponds to the other of the openings 20a. "The first thickened portion 211 may be closer to the opening 20a than the first body portion 210" can be understood as follows: the first thickened portion 211 may be closer to a corresponding opening 20a than the first body portion 210.

"In a direction from the first body portion 210 towards the first thickened portion 211, at least one part of the first thickened portion 211 exceeds the end plate 12" can be understood as follows: in the direction from the first body portion 210 towards the first thickened portion 211, the entire first thickened portion 211 exceeds the end plate 12. That is, when the direction from the first body portion 210 towards the first thickened portion 211 is viewed as a vertical upward direction, the first thickened portion 211 is above the end plate 12. The function may include increasing wall thickness of a part of the first wall 21 not restrained by the end plate 12, so as to increase the strength, thereby alleviating the problem of high risk of cracking in a case of no restraint from the end plate 12.

Alternatively, it can be understood as follows: in the direction from the first body portion 210 towards the first thickened portion 211, one part of the first thickened portion 211 exceeds the end plate 12 and the other part of the first thickened portion 211 does not exceed the end plate 12. That is, when the direction from the first body portion 210 towards the first thickened portion 211 is viewed as a vertical upward direction, one part of the first thickened portion 211 is above the end plate 12 and the other part is below the end plate 12. The function may include increasing wall thickness of a part of the first wall 21 not restrained by the end plate 12, so as to increase the strength, thereby alleviating the problem of high risk of cracking in a case of no restraint from the end plate 12.

In the foregoing solution, for the first battery cell 110a in the battery cell group 11, setting the first thickened portion 211 of the first wall 21 corresponding to the opening 20a to be thicker than the first body portion 210 can increase the strength of a part of the first wall 21 not restrained by the end plate 12, thereby effectively alleviating the problem that the part of the housing 20 not restrained by the end plate 12 cracks under impact and making the battery have high reliability.

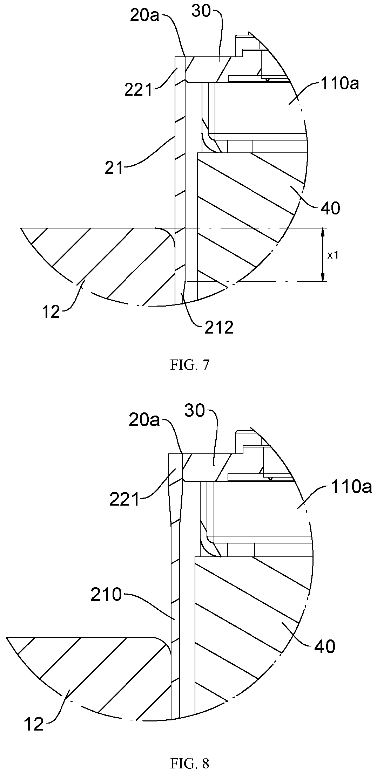

According to some embodiments of this application, referring to FIG. 7, FIG. 7 is a schematic diagram of an end plate 12 and a first wall 21 according to some embodiments of this application. In the first direction x, a projection of the first thickened portion 211 partially overlaps with a projection of the end plate 12.

In some embodiments, in the first direction x, a projection of the first thickened portion 211 may overlap with a projection of the end plate 12. That is, when the direction from the first body portion 210 towards the first thickened portion 211 is viewed as a vertical upward direction, one part of the first thickened portion 211 is above the end plate 12 and the other part is below the end plate 12.

In the foregoing solution, with the projection of the first thickened portion 211 in the first direction x set to partially overlap with the projection of the end plate 12 in the first direction x, the part of the first battery cell 110a corresponding to the opening 20a and not restrained by the end plate 12, as well as the part partially restrained by the end plate 12 can be relatively thick, effectively improving the strength of the housing 20. Therefore, the risk that the housing 20 cracks under impact is reduced and thus the battery has high reliability.

According to some embodiments of this application, size of an overlap zone of the projection of the first thickened portion 211 and the projection of the end plate 12 in the second direction z is x1, satisfying 0 mm≤x1≤10 mm.

When the direction from the first body portion 210 towards the first thickened portion 211 is viewed as a vertical upward direction, "size of an overlap zone of the projection of the first thickened portion 211 and the projection of the end plate 12 in the second direction z" can be understood as a size of the first thickened portion 211 below the end plate 12.

In some embodiments, x1 may be equal to 0, that is, a bottom end of the first thickened portion 211 is flush with a top end of the end plate 12. In some embodiments, x1 may be 1 mm, 2 mm, 3 mm, 4 mm, 5 mm, 6 mm, 7 mm, 8 mm, 9 mm, 10 mm or any value between two adjacent values of the foregoing values.

In the foregoing solution, from the perspective of improving strength, limiting the size x1 of the overlap zone of the projection of the first thickened portion 211 and the projection of the end plate 12 in the second direction z to 0 mm≤x1≤10 mm can effectively increase the strength of the part of the housing 20 not restrained by the end plate 12, so that the risk that the housing 20 cracks under impact is effectively reduced and thus the battery has high reliability.

According to some other embodiments, size x1 of an overlap zone of the projection of the first thickened portion 211 and the projection of the end plate 12 in the second direction z may alternatively be larger than 10 mm, for example, 11 mm, 12 mm, or a larger value.

According to some embodiments of this application, referring to FIG. 5, an orthographic projection of the end plate 12 on the first wall 21 is spaced from the first thickened portion 211 in the second direction z.

"An orthographic projection of the end plate 12 on the first wall 21 is spaced from the first thickened portion 211 in the second direction z" can be understood as the entire first thickened portion 211 exceeding the end plate 12.

In the foregoing solution, with the orthographic projection of the end plate 12 on the first wall 21 spaced from the first thickened portion 211 in the second direction z to make the entire first thickened portion 211 above the end plate 12, the risk that the first thickened portion 211 occupying too much space affects the volume and mass energy density of the battery can be reduced.

According to some embodiments of this application, a spacing distance between the orthographic projection of the end plate 12 on the first wall 21 and the first thickened portion 211 in the second direction z is x2, satisfying 0 mm<x2≤10 mm.

"A spacing distance between the orthographic projection of the end plate 12 on the first wall 21 and the first thickened portion 211 in the second direction z" can be understood as follows: in the direction from the first body portion 210 towards the first thickened portion 211, the entire first thickened portion 211 exceeds the size of the end plate 12, for example, a distance between a bottom end of the first thickened portion 211 and a top end of the end plate 12 in the second direction z.

In some embodiments, in some embodiments, x2 may be 1 mm, 2 mm, 3 mm, 4 mm, 5 mm, 6 mm, 7 mm, 8 mm, 9 mm, 10 mm, any value between two adjacent values of the foregoing values, or any value larger than 0 mm and smaller than 1 mm.

In the foregoing solution, limiting the spacing distance x2 between the orthographic projection of the end plate 12 on the first wall 21 and the first thickened portion 211 in the second direction z to 0 mm<x2≤10 mm can reduce the impact caused by disposing the first thickened portion 211 to the energy density of the battery.

According to some embodiments of this application, one of the following conditions is satisfied:
condition 1: referring to FIG. 5 and FIG. 6, in the first direction x, the first thickened portion 211 exceeds an inner surface of the first body portion 210;
condition 2: in the first direction x, the first thickened portion 211 exceeds an outer surface of the first body portion 210; and
condition 3: referring to FIG. 8, FIG. 8 is a schematic diagram of a first wall 21 and an end plate 12 according to some other embodiments of this application; and in the first direction x, the first thickened portion 211 exceeds both an inner surface and an outer surface of the first body portion 210.

The inner surface of the first body portion 210 may be a surface of the first body portion 210 facing towards the inside of the housing 20. The outer surface of the first body portion 210 may be a surface of the first body portion 210 facing towards the outside of the housing 20, that is, an external surface of the first body portion 210.

In some embodiments, the battery module 10 satisfies the condition 1: the first thickened portion 211 exceeds the inner surface of the first body portion 210. This can be understood as an outer surface of the first thickened portion 211 being flush with the outer surface of the first body portion 210, and an inner surface of the first thickened portion 211 exceeding the inner surface of the first body portion 210. In some other embodiments, the battery module 10 satisfies the condition 2: the first thickened portion 211 exceeds the outer surface of the first body portion 210. This can be understood as an inner surface of the first thickened portion 211 being flush with the inner surface of the first body portion 210, and an outer surface of the first thickened portion 211 exceeding the outer surface of the first body portion 210. In some other embodiments, the battery module 10 satisfies the condition 3: the first thickened portion 211 exceeds the inner surface and outer surface of the first body portion 210. This can be understood as an inner surface of the first thickened portion 211 exceeding the inner surface of the first body portion 210, and an outer surface of the first thickened portion 211 exceeding the outer surface of the first body portion 210.

In the foregoing solution, three schemes are provided. In the first one, the first thickened portion 211 is set to exceed the inner surface of the first body portion 210, that is, thickening is performed inside the housing 20, so as to utilize the space inside the housing 20. This reduces external space occupied by the battery module 10 and make the battery have a high volumetric energy density. In the second one, the first thickened portion 211 is set to exceed the outer surface of the first body portion 210, that is, thickening is performed outside the housing 20, so as to reduce the interference with the electrode assembly 40 in the housing 20 caused by disposing the first thickened portion 211. This reduces the risk of lithium precipitation and makes the battery have high reliability. In the third one, thickening is performed outside and inside the housing 20 to form the first thickened portion 211, so as to reduce the external space occupied by the battery module 10 and also reduce the interference with the battery assembly. This makes the battery have a high energy density in addition to certain reliability.

According to some embodiments of this application, the first thickened portion 211 and the first body portion 210 are integrally formed. the first thickened portion 211 includes a first part 2110 and a second part 2111 stacked in the first direction x; and in the second direction z, the first part 2110 is integrally formed with the first body portion 210, and the first part 2110 and the second part 2111 are separately formed and connected to each other.

In some embodiments, the housing 20 may be integrally formed. For example, the housing 20 is formed by stamping and drawing, and the first thickened portion 211 is also formed during the stamping and drawing process, making the first thickened portion 211 and the first body portion 210 integrally formed components.

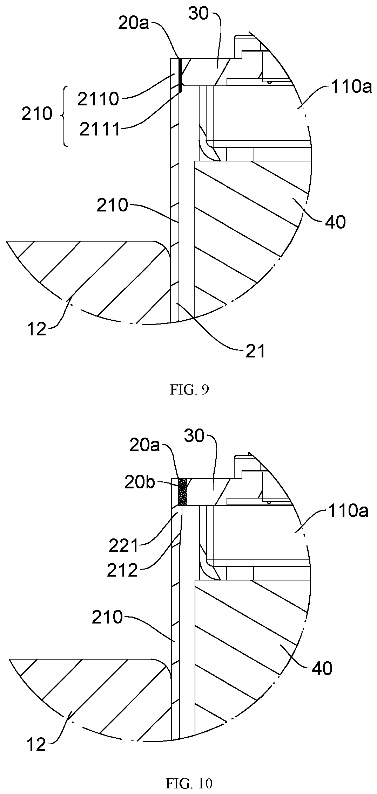

In some other embodiments, referring to FIG. 9, FIG. 9 is a schematic diagram of a first wall 21 and an end plate 12 according to some other embodiments of this application.

The first thickened portion 211 may include two independent parts: a first part 2110 and a second part 2111. For example, the first thickened portion 211 may be formed through other processes after the housing 20 is formed. For example, after the housing 20 is integrally formed, the first wall 21 includes the first part 2110 and the first body portion 210 with the same or slightly different wall thicknesses, the second part 2111 is stacked and connected to the first part 2110 through a process to form the first thickened portion 211 together with the first part 2110.

In some embodiments, the first part 2110 and the second part 2111 may be connected through welding, adhering, or other connection manners. In some embodiments, the first part 2110 and the second part 2111 may be made of the same or different materials. For example, both the first part 2110 and the second part 2111 may be made of aluminum. For another example, the first part 2110 may be made of aluminum, and the second part 2111 may be made of nickel.

In the foregoing solution, in some embodiments, integrally forming the first thickened portion 211 with the first body portion 210 allows for a high structural strength between the first thickened portion 211 and the first body portion 210, so that the risk that the housing 20 cracks under impact is reduced and thus the battery has high reliability. In some other embodiments, the first thickened portion 211 is so disposed that it includes the separate first part 2110 and second part 2111 connected to each other, to reduce the difficulty of increasing the wall thickness of the housing 20, thereby improving the manufacturing efficiency of the battery.

According to some embodiments of this application, referring to FIG. 9, in the first direction x, the first thickened portion 211 exceeds an inner surface of the first body portion 210; and the first battery cell 110a further includes an electrode assembly 40, where the electrode assembly 40 is disposed within the housing 20, and in the first direction x, the projection of the first thickened portion 211 does not overlap with a projection of the electrode assembly 40.

The electrode assembly 40 includes a positive electrode plate, a negative electrode plate, and a separator.

"In the first direction x, the first thickened portion 211 exceeds an inner surface of the first body portion 210" can be understood as an outer surface of the first thickened portion 211 being flush with an outer surface of the first body portion 210, and an inner surface of the first thickened portion 211 exceeding the inner surface of the first body portion 210.

"In the first direction x, a projection of the first thickened portion 211 does not overlap with a projection of the electrode assembly 40" can be understood as follows: the first thickened portion 211 does not interfere with the electrode assembly 40, or can be understood as follows: the first thickened portion 211 is located on a side of the electrode assembly 40 closer to the end cover 30.

In the foregoing solution, first, the projection of the first thickened portion 211 is set to not overlap with the projection of the electrode assembly 40 so that the first thickened portion 211 does not interfere with the electrode assembly 40, reducing the risk of lithium precipitation, thereby making the battery have high reliability. Second, on the basis that the projection of the first thickened portion 211 is set to not overlap with the projection of the electrode assembly 40, the first thickened portion 211 is set to exceed the inner surface of the first body portion 210, that is, thickening is performed inside the housing 20. This can reasonably use the space inside the housing 20, and reduce external space occupied by the battery module 10 without interfering with the electrode assembly 40, thereby making the battery have a higher volumetric energy density.

According to some embodiments of this application, referring to FIG. 6, size of the first thickened portion 211 in the second direction z is L, satisfying 0.3 mm≤L≤15 mm.

In some embodiments, size L of the first thickened portion 211 in the second direction z may be 0.3 mm, 0.4 mm, 0.5 mm, 0.6 mm, ..., 14.7 mm, 14.8 mm, 14.9 mm, 15 mm, or any value between any two of the foregoing values.

In the foregoing solution, limiting the size L of the first thickened portion 211 in the second direction z to 0.3 mm≤L≤15 mm can allow the first thickened portion 211 to increase the structural strength of the housing 20, so that the risk that the housing 20 cracks under impact is reduced and thus the battery has high reliability.

According to some embodiments of this application, referring to FIG. 4 and FIG. 6, thickness of the end plate 12 is A, and the thickness of the first thickened portion 211 is a, satisfying 1≤A/a≤360.

The thickness of the end plate 12 may be a maximum size of the end plate 12 in the first direction x. A larger thickness of the end plate 12 means a higher strength of the end plate 12, better restraint of the end plate 12 imposed on the battery cell 110, and correspondingly, a higher overall strength of the battery module 10. Conversely, a larger thickness of the end plate 12 means larger volume and mass percentages of the end plate 12 in the battery module 10, affecting the energy density of the battery.

The thickness of the first thickened portion 211 may be a maximum size of the first thickened portion 211 in the first direction x. A larger thickness of the first thickened portion 211 means a hiher strength of the first thickened portion 211 and a smaller cracking risk of the housing 20. Conversely, a larger thickness of the first thickened portion 211 affects the energy density of the battery.

In some embodiments, a ratio A/a of the thickness A of the end plate 12 to the thickness a of the first thickened portion 211 may be larger than or equal to 1 and smaller than or equal to 360. For example, the value of A/a may be 1, 2, 3, 4, 5, ..., 359, 360, or any value between two adjacent values of the foregoing values.

In the foregoing solution, if the battery module 10 is considered as a whole, increasing the thickness of the end plate 12 can also correspondingly increase the structural strength of the housing 20 of the first battery cell 110a. For this reason, limiting the thickness A of the end plate 12 and the thickness a of the first thickened portion 211 to satisfy 1≤A/a≤360 can increase the structural strength of the entire battery module 10, so that the risk that the housing 20 cracks under impact is reduced; and can reasonably limit the thickness of the end plate 12 and the thickness of the first thickened portion 211, reducing the impact caused by an increased wall thickness to the energy density of the battery module 10, thereby making the battery have a higher volumetric energy density and mass energy density.

According to some embodiments of this application, in a case that the first thickened portion 211 is made of aluminum or aluminum alloy, 1≤A/a≤120 is satisfied; or in a case that the first thickened portion 211 is made of steel, 2.5≤A/a≤360 is satisfied.

In some embodiments, the first thickened portion 211 may be made of aluminum or aluminum alloy. For example, the housing 20 may be an aluminum shell. A/a may satisfy 1≤A/a≤120, that is, the value of A/a may be 1, 2, 3, 4, 5, ..., 119, 120, or any value between two adjacent values of the foregoing values. In some embodiments, A may satisfy 2 mm≤A≤36 mm, that is, the thickness of the end plate 12 may be any value larger than or equal to 2 mm and smaller than or equal to 36 mm. a may satisfy 0.3 mm≤a≤2 mm, that is, the thickness of the end plate 12 may be any value larger than or equal to 0.3 mm and smaller than or equal to 2 mm.

In some embodiments, the first thickened portion 211 may be made of steel. For example, the housing 20 may be a steel shell. A/a may satisfy 2.5≤A/a≤360, that is, the value of A/a may be 2.5, 3, 3.5, 4, 4.5, ..., 359, 360, or any value between two adjacent values of the foregoing values. In some embodiments, A may satisfy 2 mm≤A≤36 mm, that is, the thickness of the end plate 12 may be any value larger than or equal to 2 mm and smaller than or equal to 36 mm. a may satisfy 0.1 mm≤a≤0.8 mm, that is, the thickness of the end plate 12 may be any value larger than or equal to 0.1 mm and smaller than or equal to 0.8 mm.

In the foregoing solution, in some embodiments, when the first thickened portion 211 is made of aluminum shell, the thickness A of the end plate 12 and the thickness a of the first thickened portion 211 can be limited to satisfy 1≤A/a≤120, so that the battery module 10 has a high structural strength and thus the battery has high reliability. In some embodiments, when the first thickened portion 211 is made of steel shell, the thickness A of the end plate 12 and the thickness a of the first thickened portion 211 can be limited to satisfy 2≤A/a≤360, so that the battery module 10 has a high structural strength and thus the battery has high reliability.

According to some embodiments of this application, in a case that the first thickened portion 211 is made of aluminum or aluminum alloy, 1.4≤A/a≤90 is satisfied.

In some embodiments, the first thickened portion 211 may be made of aluminum. For example, the housing 20 may be an aluminum shell. A/a may satisfy 1.4≤A/a≤90, that is, the value of A/a may be 1.4, 1.5, 1.6, 1.7, 1.8, ..., 89.9, 90, or any value between two adjacent values of the foregoing values.

In the foregoing solution, in some embodiments, when the first thickened portion 211 is made of aluminum shell, the thickness A of the end plate 12 and the thickness a of the first thickened portion 211 can be limited to satisfy 1.9≤A/a≤90, so that the battery module 10 has a high structural strength and thus the battery has high reliability.

According to some embodiments of this application, referring to FIG. 5 and FIG. 6, the first wall 21 further includes a transition portion 212. The first thickened portion 211 is connected to the first body portion 210 through the transition portion 212, and in the direction from the first body portion 210 towards the first thickened portion 211, thickness of the transition portion 212 gradually increases.

The transition portion 212 is a part disposed between the first body portion 210 and the first thickened portion 211. The role of the transition portion 212 may include allowing for a gradual increase in wall thickness of a part of the first wall 21 between the first body portion 210 and the first thickened portion 211 so as to make a mild transition between the first body portion 210 and the first thickened portion 211.

In some embodiments, a part of the transition portion 212 with a maximum wall thickness may be connected to the first thickened portion 211, and the maximum wall thickness of the transition portion 212 may be equal to wall thickness of the first thickened portion 211. A part of the transition portion 212 with a minimum wall thickness may be connected to the first body portion 210, and the minimum wall thickness of the transition portion 212 may be equal to wall thickness of the first body portion 210.

In the foregoing solution, disposing the transition portion 212 to gradually thicken the housing 20 in the second direction z can help to form the first thickened portion 211, thereby reducing the manufacturing difficulty of the housing 20 and improving the manufacturing efficiency of the battery.

According to some embodiments of this application, in the direction from the first body portion 210 towards the first thickened portion 211, the transition portion 212 exceeds the end plate 12. Alternatively, in the direction from the first body portion 210 towards the first thickened portion 211, at least a part of the transition portion 212 does not exceed the end plate 12.

In some embodiments, "in the direction from the first body portion 210 towards the first thickened portion 211, the transition portion 212 exceeds the end plate 12" can be understood as follows:
both the first thickened portion 211 and the transition portion 212 exceed the end plate 12. That is, when the direction from the first body portion 210 towards the first thickened portion 211 is viewed as a vertical upward direction, both the first thickened portion 211 and the transition portion 212 are above the end plate 12.

In some embodiments, "in the direction from the first body portion 210 towards the first thickened portion 211, at least a part of the transition portion 212 does not exceed the end plate 12" can be understood as follows: a part of the transition portion 212 does not exceed the end plate 12. That is, when the direction from the first body portion 210 towards the first thickened portion 211 is viewed as a vertical upward direction, a part of the transition portion 212 is above the end plate 12 and the other part is below the end plate 12. Alternatively, when the direction from the first body portion 210 towards the first thickened portion 211 is viewed as a vertical upward direction, the transition portion 212 is entirely below the end plate 12.

In the foregoing solution, in some embodiments, the transition portion 212 is set to exceed the end plate 12, that is, both the transition portion 212 and the first thickened portion 211 are entirely above the end plate 12, so as to effectively reduce the risk of the housing 20 thickened affecting the energy density of the battery. In some embodiments, at least a part of the transition portion 212 is set to not exceed the end plate 12, that is, the part of the first wall 21 not restrained by the end plate 12 is thickened, so that the strength of the housing 20 can be effectively increased, the risk that the housing 20 cracks under impact is reduced, and thus the battery has high reliability.

According to some embodiments of this application, the end cover 30 is connected to the first thickened portion 211.

The end cover 30 is a member that closes the opening 20a. In some embodiments, the first thickened portion 211 and the end cover 30 may be made of the same or different materials. The first thickened portion 211 may be made of aluminum, aluminum alloy, steel, or other materials. The end cover 30 may be made of aluminum, aluminum alloy, steel, or other materials.

In some embodiments, the end cover 30 may be welded, adhered, or connected through a threaded member to the first thickened portion 211.

In some embodiments, an end of the first thickened portion 211 away from the first body portion 210 may be directly welded to the end cover 30.

In the foregoing solution, disposing the end cover 30 can effectively close the opening 20a so that the electrode assembly and electrolyte of the first battery cell 110a are in a closed space, reducing the interference of external substances with the interior of the first battery cell 110a. In addition, disposing the first thickened portion 211 can increase the strength of the housing, reducing or alleviating the risk of cracking and failure at a welding location between the end cover 30 and the housing, thereby improving reliability of the battery.

According to some embodiments of this application, referring to FIG. 10, FIG. 10 is a schematic diagram of a first wall and an end plate according to some other embodiments of this application. The end cover 30 is welded to the first wall 21 to form a first welded zone 20b, and in the second direction z, the first thickened portion 211 is located between the first welded zone 20b and the first body portion 210.

The first welded zone 20b is a heat fusion zone formed by welding the end cover 30 and the first wall 21. In some embodiments, the first welded zone 20b may be a weld pool formed by welding the end cover 30 and the first wall 21.

"In the second direction z, the first thickened portion 211 is located between the first welded zone 20b and the first body portion 210" can be understood as the first thickened portion 211 may be disposed right adjacent to the first welded zone 20b. In some embodiments, when the second direction z is parallel to the vertical direction, the opening 20a may be above the first thickened portion 211, and the first thickened portion 211 may be below the first welded zone. In some embodiments, after the end cover 30 and the first wall 21 are welded, a heat-affected zone that reduces the strength of the first wall 21 is often formed below the melt pool, and the first thickened portion 211 may correspond to the heat-affected zone.

In some embodiments, when the end cover 30 and first wall 21 of the first battery cell 110a are removed to measure the first wall 21, it may be measured that the thickness of the first thickened portion 211 is larger than thickness of the first welded zone 20b, or equal to the thickness of the first welded zone 20b. In the foregoing solution, disposing the first thickened portion 211 between the first welded zone 20b and the first body portion 210 allows for a high strength after the housing and the end cover 30 are welded, reducing or alleviating the risk of cracking and failure at a welding location between the end cover 30 and the housing, thereby improving reliability of the battery.

According to some embodiments of this application, the first battery cell 110a has two first walls 21 disposed opposite each other in the first direction x.

In some embodiments, the housing 20 may be square and may include a peripheral wall and a bottom wall, with the peripheral wall disposed at the edge of the bottom wall. The first wall 21 may be a part of the peripheral wall. In the first direction x, the peripheral wall may include two wall portions disposed opposite. Both the two wall portions may be first walls 21, that is, the two wall portions have the first thickened portion 211 with a larger thickness.

In the foregoing solution, disposing two opposite wall portions of the first battery cell 110a as first walls 21 with the first thickened portion 211 can effectively increase impact resistance of the first battery cell 110a, so that the risk that the housing 20 cracks is reduced and reliability of the battery is improved.

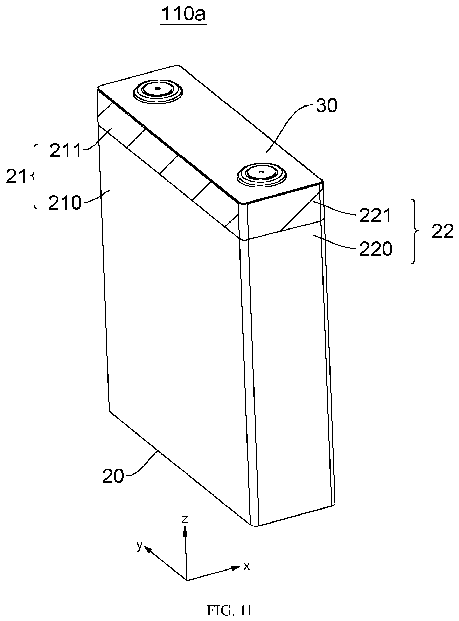

According to some other embodiments of this application, referring to FIG. 11, FIG. 11 is a schematic diagram of a first battery cell 110a according to some other embodiments of this application.

The housing 20 has second walls 22 in a third direction y, the second wall 22 is adjacent to the first wall 21, and area of the first wall 21 is larger than area of the second wall 22, the third direction y, the second direction z, and the first direction x being perpendicular to each other. The second wall 22 includes a second body portion 220 and a second thickened portion 221 arranged in the second direction z. In the second direction z, the second body portion 220 is farther from the opening 20a than the second thickened portion 221, and thickness of the second thickened portion 221 is larger than thickness of the second body portion 220.

In some embodiments, the housing 20 may be square and may include a peripheral wall and a bottom wall, with the peripheral wall disposed at the edge of the bottom wall. The first wall 21 and the second wall 22 may be a part of the peripheral wall. The first wall 21 and the second wall 22 are disposed adjacent. In some embodiments, the first wall 21 may be a wall portion with a larger area of the housing 20, and the second wall 22 may be a wall portion with a smaller area of the housing 20. When the first wall 21 is a wall portion with a larger area of the housing 20, an external surface of the first wall 21 may be a larger surface of the first battery cell 110a, and an external surface of the second wall 22 may be a side surface of the first battery cell 110a.

In some embodiments, the first direction x may be a thickness direction of the battery cell 110, the second direction z may be a height direction of the battery cell 110, and the third direction y may be a width direction of the battery cell 110.

The second thickened portion 221 is a part of the second wall 22, and the second body portion 220 is a part of the second wall 22. The thickness of the second thickened portion 221 is larger than the thickness of the second body portion 220, that is, the second thickened portion 221 is thicker than the second body portion 220 or this may be understood as the strength of the second thickened portion 221 being higher than the strength of the second body.

In the second direction z, the second thickened portion 221 and the second body portion 220 are arranged side by side, and the second body portion 220 is farther from the opening 20a than the second thickened portion 221. In some embodiments, the second thickened portion 221 and the second body portion 220 may be connected to each other. In some other embodiments, the second thickened portion 221 and the second body portion 220 may be connected by a transition structure so that thickness of the second wall 22 is gradually increased.

In some embodiments, the second thickened portion 221 may be directly or indirectly connected to the end cover 30. For example, the second thickened portion 221 may be directly welded to the end cover 30. For another example, the second wall 22 further includes a second connecting transition portion, and the second thickened portion 221 is connected to the end cover 30 through the second connecting transition portion. Thickness of the second connecting transition portion may be smaller than the thickness of the second thickened portion 221. For example, the end cover 30 and the second wall 22 are welded to form a second welded zone. In the second direction z, the second thickened portion 221 may be located between the second welded zone and the second body portion 220. The thickness of the second thickened portion 221 may be larger than thickness of the second welded zone.

In the foregoing solution, setting the second thickened portion 221 of the second wall 22 corresponding to the opening 20a to be thicker than the second body portion 220 allows for a high strength after the housing 20 and the end cover 30 are welded, reducing or alleviating the risk of cracking and failure at a welding location between the end cover 30 and the housing 20, thereby improving reliability of the battery.

According to some embodiments of this application, the housing 20 includes two first walls 21 disposed opposite each other in the first direction x, and two second walls 22 disposed opposite each other in the third direction y, and the first walls 21 and the second walls 22 are connected to each other to enclose the opening 20a.

In some embodiments, the peripheral wall of the housing 20 of the first battery cell 110a may include the first wall 21 and the second wall 22, that is, the housing 20 includes two first walls 21 disposed opposite and two second walls 22 disposed opposite. "The first walls 21 and the second walls 22 are connected to each other to enclose the opening 20a" can be understood as the first thickened portion 211 and the second thickened portion 221 are disposed around the opening end of the housing 20.

In the foregoing solution, setting a part of the housing 20 surrounding the opening 20a to be thicker allows for a high strength after the housing 20 and the end cover 30 are welded, reducing or alleviating the risk of cracking and failure at a welding location between the end cover 30 and the housing 20, thereby improving reliability of the battery.

According to some embodiments of this application, each of the battery cells 110 in the battery cell group 11 is the first battery cell 110a.

In some embodiments, all battery cells 110 in the battery module 10 are first battery cells 110a, that is, housings 20 of all battery cells 110 in the battery module 10 each are provided with the first wall 21 with the first thickened portion 211.

In the foregoing solution, with each battery cell 110 in the battery module 10 set to be the first battery cell 110a, that is, with each battery cell 110 disposed with the first thickened portion 211, the battery module 10 can have a high structural strength, effectively overcoming impact caused by charging/discharging-induced swelling or external influence to the housing 20. This reduces the cracking risk of the housing 20 and allows for high reliability of the battery.

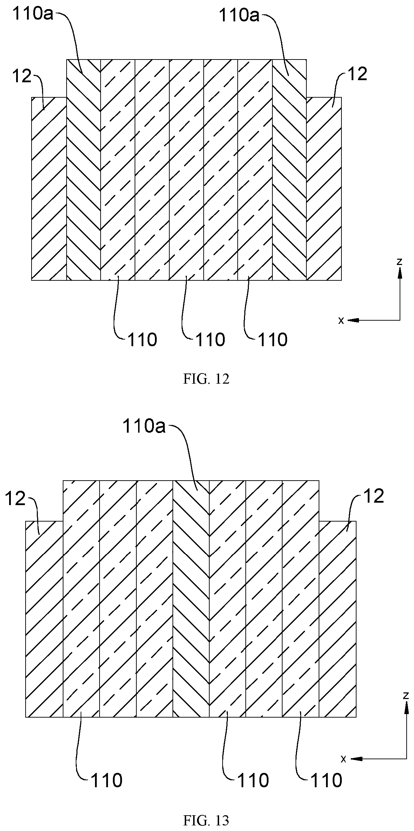

According to some other embodiments of this application, referring to FIG. 12, FIG. 12 is a schematic diagram of a battery module 10 according to some other embodiments of this application.

In the first direction x, the first battery cell 110a is located at an end of the battery cell group 11, and the first battery cell 110a abuts against the end plate 12.

In some embodiments, the battery cell 110 at the end of the battery cell group 11 may be disposed as the first battery cell 110a. The battery cells 110 at two opposite ends of the battery cell group 11 in the first direction x may all be the first battery cells 110a. In the battery module 10, the first battery cell 110a at the end abuts against the corresponding end plate 12.

In some embodiments, the first battery cell 110a at the end may directly or indirectly abut against the end plate 12. "Indirectly abut against the end plate 12" can be understood as a separating member such as an insulation plate being disposed between the first battery cell 110a and the end plate 12.

In some embodiments, in the battery module 10, one, two, or more first battery cells 110a may be disposed at the end of the battery cell group 11.

In the foregoing solution, disposing the battery cell 110 abutting against the end plate 12 as the first battery cell 110a can effectively alleviate the problem that because the part of the first wall 21 near the end cover 30 is not restrained, the first wall 21 cracks under impact of internal swelling force on the first wall 21 during charging and discharging of the battery cell 110, where such cracking affects reliability of the battery. This allows for high reliability of the battery module 10 and thus high reliability of the battery.

According to some embodiments of this application, the first wall 21 is a wall portion of the housing 20 of the first battery cell 110a facing towards the end plate 12, and a thickness direction of the first wall 21 is the first direction x.

"The first wall 21 is a wall portion of the housing 20 of the first battery cell 110a facing towards the end plate 12" can be understood as follows: in some embodiments, the first battery cell 110a directly or indirectly abuts against the end plate 12, and the first wall 21 disposed with the first thickened portion 211 directly or indirectly abuts against the end plate 12. Alternatively, it may be understood as follows: the wall portion of the first battery cell 110a facing away from the end plate 12 in the first direction x may or be disposed with the first thickened portion 211 or not.

In the foregoing solution, limiting the first wall 21 to be a wall portion abutting against the end plate 12 allows the first thickened portion 211 to effectively improve the structural strength of the part of the first wall 21 not restrained by the end plate 12, so that the risk of the first wall 21 cracking under impact is small, thereby improving reliability of the battery module 10 and thus improving reliability of the battery.

According to some other embodiments of this application, referring to FIG. 13, FIG. 13 is a schematic diagram of a battery module 10 according to some other embodiments of this application.

In the first direction x, the first battery cell 110a is located at the middle of the battery cell group 11.

In some embodiments, the battery cell 110 at the middle of the battery cell group 11 may be disposed as the first battery cell 110a. The middle of the battery cell group 11 may refer to one or two battery cells 110 at the middle in the first direction x. For example, FIG. 11 shows seven battery cells 110, and the fourth battery cell 110 is the battery cell 110 at the middle of the battery cell group 11.

In some embodiments, when the battery module 10 is subjected to external impact (or which can be understood as being under a working condition of vibration), the battery cell 110 at the middle is more affected. Therefore, in the foregoing solution, disposing the battery cell 110 at the middle of the battery cell group 11 as the first battery cell 110a can effectively alleviate the problem that the housing 20 of the battery cell 110 cracks when the battery module 10 is under impact, while such cracking affects the reliability of the battery module 10. This allows for high reliability of the battery.

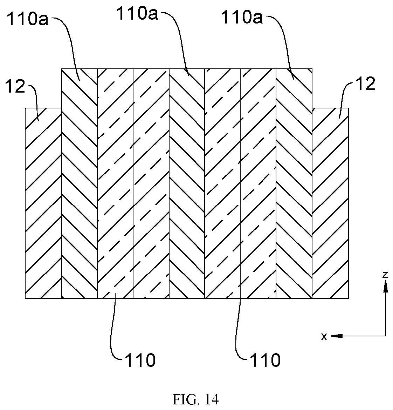

According to some other embodiments of this application, referring to FIG. 14, FIG. 14 is a schematic diagram of a battery module 10 according to some other embodiments of this application. Multiple first battery cells 110a are provided, and in the first direction x, the first battery cells 110a are provided at the middle and end of the battery cell group 11.

In some embodiments, the battery cell 110 at the end of the battery cell group 11 may be disposed as the first battery cell 110a, and the battery cell 110 at the middle of the battery cell group 11 may be disposed as the first battery cell 110a.

In some embodiments, the battery cells 110 at two opposite ends of the battery cell group 11 in the first direction x may all be the first battery cells 110a. In some embodiments, one, two, or more first battery cells 110a may be disposed at the end of the battery cell group 11.

In the foregoing solution, with the battery cell 110 at the middle and the battery cell 110 at the end of the battery cell group 11 disposed as first battery cells 110a, the battery module 10 can effectively cope with impact of cracking of the housing 20 caused by the internal swelling of the battery cell 110 during charging and discharging and external impact in a working condition of vibration. This allows for high reliability of the battery.

According to some embodiments of this application, a battery is further provided. The battery includes the foregoing battery module 10.

According to some embodiments of this application, an energy storage apparatus is further provided. The energy storage apparatus includes the foregoing battery module 10.

According to some embodiments of this application, an electric apparatus is further provided, the electric apparatus includes the battery module 10 described above, for providing electric energy.

According to some embodiments of this application, a battery module 10 is provided, referring to FIG. 1 to FIG. 14.

The battery module 10 includes a battery cell group 11 and end plates 12. The battery cell group 11 includes multiple first battery cells 110a stacked in a first direction x. The end plate 12 is located at an end of the battery cell group 11 in the first direction x. The first battery cell 110a includes a housing 20 and an end cover 30. The housing 20 has an opening 20a in a second direction z, the housing 20 has first walls 21 in the first direction x, the first wall 21 includes a first body portion 210 and a first thickened portion 211 arranged in the second direction z, and thickness of the first thickened portion 211 is larger than thickness of the first body portion 210, the first direction x and the second direction z being perpendicular to each other. The end cover 30 is connected to the housing 20 to close the opening 20a. In some embodiments, the end cover 30 may be connected to the first thickened portion 211. In a direction from the first body portion 210 towards the first thickened portion 211, at least a part of the first thickened portion 211 exceeds the end plate 12.

Setting the first thickened portion 211 of the first wall 21 corresponding to the opening 20a to be thicker than the first body portion 210 can allow for a high strength after the housing 20 and the end cover 30 are welded, reducing or alleviating the risk of cracking and failure at the welding position of the end cover 30 and the housing 20, thereby improving the reliability of the battery; and increase the strength of a part of the first wall 21 not restrained by the end plate 12, thereby effectively alleviating the problem that the part of the housing 20 not restrained by the end plate 12 cracks under impact and making the battery have high reliability.

In some embodiments, the first thickened portion 211 is connected to the first body portion 210 through a transition portion 212, and in the direction from the first body portion 210 towards the first thickened portion 211, thickness of the transition portion 212 gradually increases.

The positions of the first thickened portion 211 and the transition portion 212 are limited. For example, in some embodiments, in the first direction x, a projection of the first thickened portion 211 partially overlaps with a projection of the end plate 12, that is, a part of the first thickened portion 211 is under the top of the end plate 12. For example, in some embodiments, the entire first thickened portion 211 is above the end plate 12. For another example, both the transition portion 212 and the first thickened portion 211 exceed the end plate 12. For another example, a part of the transition portion 212 is under the top of the end plate 12.

In some embodiments, the first thickened portion 211 may be above an electrode assembly 40 in the first battery cell 110a, so that the first thickened portion 211 does not interfere with the electrode assembly 40.

In some embodiments, thickening may be performed inside the housing 20 or outside the housing 20 to form the first thickened portion 211, or thickening may be performed both inside and outside the housing 20 to form the first thickened portion 211.

In some embodiments, the first thickened portion 211 can be formed by stacking and connecting a first part 2110 and a second part 2111, or the first thickened portion 211 may be integrally formed with the first body portion 210.

In some embodiments, the battery module 10 is viewed as a whole, and thickness A of the end plate 12 and thickness a of the first thickened portion 211 are limited. In a case that the housing 20 is an aluminum shell, 1≤A/a≤120 is satisfied. In some embodiments, in a case that the housing 20 is an aluminum shell, 1.4≤A/a≤90 may be satisfied. In a case that the housing 20 is a steel shell, 2.5≤A/a≤360 is satisfied.

The foregoing descriptions are merely preferred embodiments of this application and are not intended to limit this application. Persons skilled in the art understand that this application may have various modifications and variations. Any modification, equivalent replacement, and improvement made without departing from the spirit and principle of this application shall fall within the protection scope of this application.

## Claims

1. A battery module, comprising:
a battery cell group, comprising multiple battery cells stacked in a first direction; and
end plates, wherein the end plate is located at an end of the battery cell group in the first direction; wherein
the multiple battery cells comprise at least one first battery cell, and the first battery cell comprises:
a housing, wherein the housing has an opening in a second direction, the housing has first walls in the first direction, the first wall comprises a first body portion and a first thickened portion arranged in the second direction, the first body portion is farther from the opening than the first thickened portion, and thickness of the first thickened portion is larger than thickness of the first body portion, the first direction and the second direction being perpendicular to each other; and
an end cover, wherein the end cover is connected to the housing to close the opening;
wherein in a direction from the first body portion towards the first thickened portion, at least a part of the first thickened portion exceeds the end plate.

2. The battery module according to claim 1, wherein
in the first direction, a projection of the first thickened portion partially overlaps with a projection of the end plate.

3. The battery module according to claim 2, wherein
size of an overlap zone of the projection of the first thickened portion and the projection of the end plate in the second direction is x1, satisfying 0 mm≤x1≤10 mm.

4. The battery module according to claim 1, wherein
an orthographic projection of the end plate on the first wall is spaced from the first thickened portion in the second direction.

5. The battery module according to claim 4, wherein
a spacing distance between the orthographic projection of the end plate on the first wall and the first thickened portion in the second direction is x2, satisfying 0 mm<x2≤10 mm.

6. The battery module according to any one of claims 1 to 5, wherein
one of the following conditions is satisfied:
in the first direction, the first thickened portion exceeds an inner surface of the first body portion;
in the first direction, the first thickened portion exceeds an outer surface of the first body portion; and
in the first direction, the first thickened portion exceeds both an inner surface and an outer surface of the first body portion.

7. The battery module according to any one of claims 1 to 6, wherein the first thickened portion is integrally formed with the first body portion; or
the first thickened portion comprises a first part and a second part stacked in the first direction; and in the second direction, the first part is integrally formed with the first body portion, and the first part and the second part are separately formed and connected to each other.

8. The battery module according to any one of claims 1 to 7, wherein
in the first direction, the first thickened portion exceeds the inner surface of the first body portion; and
the first battery cell further comprises an electrode assembly, wherein the electrode assembly is disposed within the housing, and in the first direction, the projection of the first thickened portion does not overlap with a projection of the electrode assembly.

9. The battery module according to any one of claims 1 to 8, wherein
size of the first thickened portion in the second direction is L, satisfying 0.3 mm≤L≤15 mm.

10. The battery module according to any one of claims 1 to 9, wherein
thickness of the end plate is A, and the thickness of the first thickened portion is a, satisfying 1≤A/a≤360.

11. The battery module according to claim 10, wherein
in a case that the first thickened portion is made of aluminum or aluminum alloy, 1≤A/a≤120 is satisfied; or
in a case that the first thickened portion is made of steel, 2.5≤A/a≤360 is satisfied.

12. The battery module according to claim 11, wherein
in a case that the first thickened portion is made of aluminum or aluminum alloy, 1.4≤A/a≤90 is satisfied.

13. The battery module according to any one of claims 1 to 12, wherein
the first wall further comprises a transition portion; and
the first thickened portion is connected to the first body portion through the transition portion, and in the direction from the first body portion towards the first thickened portion, thickness of the transition portion gradually increases.

14. The battery module according to claim 13, wherein
in the direction from the first body portion towards the first thickened portion, the transition portion exceeds the end plate; or
in the direction from the first body portion towards the first thickened portion, at least a part of the transition portion does not exceed the end plate.

15. The battery module according to any one of claims 1 to 14, wherein
the end cover is connected to the first thickened portion.

16. The battery module according to any one of claims 1 to 14, wherein
the end cover is welded to the first wall to form a first welded zone, and in the second direction, the first thickened portion is located between the first welded zone and the first body portion.

17. The battery module according to any one of claims 1 to 16, wherein
the first battery cell has two first walls disposed opposite each other in the first direction.

18. The battery module according to any one of claims 1 to 17, wherein
the housing has second walls in a third direction, the second wall is adjacent to the first wall, and area of the first wall is larger than area of the second wall, the third direction, the second direction, and the first direction being perpendicular to each other; and
the second wall comprises a second body portion and a second thickened portion stacked in the second direction; and in the second direction, the second body portion is farther from the opening than the second thickened portion, and thickness of the second thickened portion is larger than thickness of the second body portion.

19. The battery module according to claim 18, wherein
the housing comprises two first walls disposed opposite each other in the first direction, and two second walls disposed opposite each other in the third direction, and the first walls and the second walls are connected to each other to enclose the opening.

20. The battery module according to any one of claims 1 to 19, wherein
each of the battery cells in the battery cell group is the first battery cell.

21. The battery module according to any one of claims 1 to 19, wherein
in the first direction, the first battery cell is located at an end of the battery cell group, and the first battery cell abuts against the end plate.

22. The battery module according to claim 21, wherein
the first wall is a wall portion of the housing of the first battery cell facing towards the end plate, and a thickness direction of the first wall is the first direction.

23. The battery module according to any one of claims 1 to 19, wherein
in the first direction, the first battery cell is located at the middle of the battery cell group.

24. The battery module according to any one of claims 1 to 19, wherein
multiple first battery cells are provided, and in the first direction, the first battery cells are provided at the middle and end of the battery cell group.

25. A battery, comprising the battery module according to any one of claims 1 to 24.

26. An energy storage apparatus, comprising the battery module according to any one of claims 1 to 24.

27. An electric apparatus, comprising the battery module according to any one of claims 1 to 24 configured to supply electric energy.
